# EUROPÄISCHE PATENTSCHRIFT

(11) **EP 3 602 119 B1**
(45) Veröffentlichungstag und Bekanntmachung des Hinweises auf die Patenterteilung: **30.06.2021**
(21) Anmeldenummer: 18713888.8
(22) Anmeldetag: 26.03.2018
(51) Int. Cl.: G01S 15/931, G01S 7/539, G01S 15/87

(54) **VERFAHREN ZUM ERFASSEN EINES OBJEKTS IN EINEM UMGEBUNGSBEREICH EINES KRAFTFAHRZEUGS MIT KLASSIFIZIERUNG DES OBJEKTS, ULTRASCHALLSENSORVORRICHTUNG SOWIE KRAFTFAHRZEUG**
METHOD FOR DETECTING AN OBJECT IN A SURROUNDING AREA OF A MOTOR VEHICLE WITH CLASSIFICATION OF THE OBJECT, ULTRASONIC SENSOR DEVICE AND MOTOR VEHICLE
PROCÉDÉ DE DÉTECTION D'UN OBJET DANS UNE ZONE ENVIRONNANTE D'UN VÉHICULE À MOTEUR AVEC CLASSIFICATION DE L'OBJET, DISPOSITIF DE CAPTEUR ULTRASONIQUE ET VÉHICULE À MOTEUR

(30) Priorität: 29.03.2017 DE 102017106743
(43) Veröffentlichungstag der Anmeldung: 05.02.2020
(73) Patentinhaber: Valeo Schalter und Sensoren GmbH, 74321 Bietigheim-Bissingen (DE)
(72) Erfinder: THUNERT, Fabian, 74321 Bietigheim-Bissingen (DE); FRAPSAUCE, Alice, 74321 Bietigheim-Bissingen (DE)
(74) Vertreter: Enge, Sebastian
(86) Internationale Anmeldenummer: PCT/EP2018/057588
(87) Internationale Veröffentlichungsnummer: WO 2018/177978

(56) Entgegenhaltungen:
- DE-A1-102005 044 050
- DE-A1-102014 111 125
- DE-A1-102014 116 014
- DE-A1-102014 202 497

## Beschreibung

Die vorliegende Erfindung betrifft ein Verfahren zum Erfassen eines Objekts in einem Umgebungsbereich eines Kraftfahrzeugs, bei welchem mittels eines ersten Ultraschallsensors das Objekt innerhalb eines ersten Erfassungsbereichs erfasst wird, wobei sich der erste Erfassungsbereich des ersten Ultraschallsensors oberhalb einer ersten Erfassungshöhe befindet, wobei zum Erfassen des Objekts zumindest ein Echo des von dem Objekt reflektierten Ultraschallsignals mittels des ersten Ultraschallsensors empfangen wird, und wobei das Objekt anhand des zumindest einen empfangenen Echos als hohes Objekt oder als niedriges Objekt klassifiziert wird. Darüber hinaus betrifft die vorliegende Erfindung eine Ultraschallsensorvorrichtung für ein Kraftfahrzeug. Schließlich betrifft die vorliegende Erfindung ein Kraftfahrzeug mit einer derartigen Ultraschallsensorvorrichtung.

Das Interesse richtet sich vorliegend auf Ultraschallsensorvorrichtungen für Kraftfahrzeuge. Derartige Ultraschallsensorvorrichtungen umfassen üblicherweise mehrere Ultraschallsensoren, mit denen Objekte erfasst werden können. Solche Ultraschallsensorvorrichtungen können Teil eines Fahrerassistenzsystems des Kraftfahrzeugs sein. Beispielsweise werden die Ultraschallsensorvorrichtungen in Parkhilfesystemen eingesetzt. Dabei sind aus dem Stand der Technik Ultraschallsensorvorrichtungen bekannt, bei welchen bis zu sechs Ultraschallsensoren in einem Stoßfänger verbaut sind. Bei der Erfassung der Objekte bzw. bei der Messung gibt es direkte und indirekte Signalwege. Über die Auswertung der Signallaufzeiten kann die Position des Objekts bezüglich zweier Raumrichtungen bestimmt werden.

Darüber hinaus sind aus dem Stand der Technik Verfahren bekannt, bei denen mit Hilfe von Ultraschallsensoren die Höhe eines Objekts bestimmt wird bzw. das Objekt als hohes Objekt oder als niedriges Objekt klassifiziert wird. Hierzu kann beispielsweise überprüft werden, ob mit dem Ultraschallsensor mehrere Echos des von dem Objekt reflektierten Ultraschallsignals empfangen werden. Falls entweder kurz hinter dem ersten Echo oder im doppelten Abstand zu dem ersten Echo ein weiteres Echo empfangen wird, so ist die Annahme, dass es sich um ein hohes Objekt handelt.

Nachteilig bei dem beschriebenen Verfahren zur Höhenerkennung ist, dass es auch Situationen gibt, bei denen mehrere Echos kurz hintereinander auftreten, ohne dass ein hohes Objekt vorhanden ist. Besonders nachteilig ist dies, wenn auf Grundlage dieser Höhenerkennung eine unbeabsichtigte Bremsung ausgelöst wird oder ein Einparkmanöver unterbrochen oder abgebrochen wird. Dieses Problem könnte dadurch gelöst werden, dass Ultraschallsensoren eingesetzt werden, welche nur Objekte ab einer gewissen Mindesthöhe erkennen können. Nachteilig hierbei wäre, dass damit auch die für andere Funktionen zu erfassenden Objekte mit einer hohen Wahrscheinlichkeit nicht mehr erkannt werden können. Dies kann beispielsweise dazu führen, dass durch nicht erkannte niedrige Objekte die Unterkante des Stoßfängers beschädigt wird.

In diesem Zusammenhang beschreibt die DE 10 2008 028 222 A1 ein Verfahren zur Bestimmung eines Abstands eines Fahrzeugs von einem Hindernis und einer Höhe des Hindernisses relativ zu dem Fahrzeug. Dabei ist es vorgesehen, dass mindestens eine Signalwelle von dem Fahrzeug seitlich nach unten abgestrahlt wird, wobei die mindestens eine Signalwelle bezüglich einer Fahrbahnsenkrechten in einem ersten Winkelbereich zur Breitenrichtung des Fahrzeugs von dem Fahrzeug nach außen und bezüglich der Fahrbahnsenkrechten in einem zweiten Winkelbereich zur Längsrichtung des Fahrzeugs abgestrahlt wird. Dabei werden abhängig von Reflexionen dieser mindestens einen Signalwelle der Abstand und die Höhe bestimmt.

Darüber hinaus beschreibt die DE 10 2013 207 823 A1 ein Verfahren zur Auswertung von Ultraschallsignalen in einem Fahrzeug, bei dem ein Ultraschallsignal ausgesendet wird und ein reflektiertes Ultraschallsignal mit mindestens drei Ultraschallsensoren empfangen wird. Dabei sind jeweils wenigstens zwei Ultraschallsensoren vertikal und horizontal zueinander versetzt angeordnet, wobei mindestens eine Phaseninformation des reflektierten Ultraschallsignals in Bezug auf die empfangenden Ultraschallsensoren erfasst wird. Somit kann neben dem Abstand und der Horizontalrichtung der reflektierten Ultraschallsignale auch die vertikale Richtung der reflektierten Ultraschallsignale auf einfache Weise bestimmt werden. Somit können alle Koordinaten des Objekts im Raum bestimmt werden.

Des Weiteren beschreibt die EP 1 002 920 B1 ein automatisches Türöffnungssystem für Kraftfahrzeuge mit einer Sensoreinrichtung zur Erfassung von Objekten in einem vorgegebenen Bereich um das Fahrzeug. Dabei ist die Sensoreinrichtung derart ausgebildet, dass die Höhe des sich in dem vorgegebenen Bereich befindlichen Objekts relativ zu einem vorgegebenen Bezugskoordinatensystem erfassbar ist. Ferner ist es vorgesehen, dass die Sensoreinrichtung zumindest zwei Antennen zum Bestimmen der Höhe des Objekts aufweist, welche auf verschiedenen Höhen am Fahrzeug angeordnet sind. Das Dokument DE 10 2014 202 497 A1 offenbart ein Verfahren zum Abschätzen von geometrischen Parametern eines seitlichen fahrbahnfesten Objekts durch ein Kraftfahrzeug, welches sich auf einer Fahrspur der Fahrbahn befindet.

Es ist Aufgabe der vorliegenden Erfindung, eine Lösung aufzuzeigen, wie die Höhe eines Objekts mithilfe von Ultraschallsensoren auf einfache und zuverlässige Weise bestimmt werden kann.

Diese Aufgabe wird erfindungsgemäß durch ein Verfahren, durch eine Ultraschallsensorvorrichtung sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Gemäß einer Ausführungsform eines Verfahrens zum Erfassen eines Objekts in einem Umgebungsbereich eines Kraftfahrzeugs wird mittels eines ersten Ultraschallsensors das Objekt innerhalb eines ersten Erfassungsbereichs erfasst. Dabei ist es insbesondere vorgesehen, dass sich der erste Erfassungsbereich des ersten Ultraschallsensors oberhalb einer ersten Erfassungshöhe befindet. Zum Erfassen des Objekts wird bevorzugt zumindest ein Echo des von dem Objekt reflektierten Ultraschallsignals mittels des ersten Ultraschallsensors empfangen. Des Weiteren wird das Objekt anhand des zumindest einen empfangenen Echos bevorzugt als hohes Objekt oder als niedriges Objekt klassifiziert. Darüber hinaus ist es bevorzugt vorgesehen, dass zur Plausibilisierung der Klassifizierung des Objekts als hohes Objekt überprüft wird, ob das Objekt mit einem zweiten Ultraschallsensor innerhalb eines zweiten Erfassungsbereichs erfasst wird. Dabei ist es insbesondere vorgesehen, dass sich der zweite Erfassungsbereich des zweiten Ultraschallsensors oberhalb einer im Vergleich zur ersten Erfassungshöhe größeren, zweiten Erfassungshöhe befindet.

Ein erfindungsgemäßes Verfahren dient zum Erfassen eines Objekts in einem Umgebungsbereich eines Kraftfahrzeugs. Hierbei wird mittels eines ersten Ultraschallsensors das Objekt innerhalb eines ersten Erfassungsbereichs erfasst, wobei sich der erste Erfassungsbereich des ersten Ultraschallsensors oberhalb einer ersten Erfassungshöhe befindet, wobei zum Erfassen des Objekts zumindest ein Echo des von dem Objekt reflektierten Ultraschallsignals mittels des ersten Ultraschallsensors empfangen wird. Zudem wird das Objekt anhand des zumindest einen empfangenen Echos als hohes Objekt oder als niedriges Objekt klassifiziert. Darüber hinaus wird zur Plausibilisierung der Klassifizierung des Objekts als hohes Objekt überprüft, ob das Objekt mit einem zweiten Ultraschallsensor innerhalb eines zweiten Erfassungsbereichs erfasst wird, wobei sich der zweite Erfassungsbereich des zweiten Ultraschallsensors oberhalb einer im Vergleich zu ersten Erfassungshöhe größeren, zweiten Erfassungshöhe befindet.

Das Verfahren kann mit einer Ultraschallsensorvorrichtung für ein Kraftfahrzeug durchgeführt werden. Eine solche Ultraschallsensorvorrichtung kann beispielsweise Teil eines Fahrerassistenzsystems sein, welches dazu dient, den Fahrer beim Führen des Kraftfahrzeugs zu unterstützen. Zum Erfassen des Objekts wird zumindest ein erster Ultraschallsensor verwendet. Mit dem ersten Ultraschallsensor kann ein Ultraschallsignal ausgesendet werden und Echos des von dem Objekt reflektierten Ultraschallsignals wieder empfangen werden. Dabei kann es beispielsweise der Fall sein, dass mit dem ersten Ultraschallsensor ein oder mehrere Echos des Ultraschallsignals empfangen werden. Anhand der Laufzeit zwischen dem Aussenden des Ultraschallsignals und dem Empfangen des ersten Echos kann der Abstand zwischen dem ersten Ultraschallsensor und dem Objekt bestimmt werden. Die von dem Objekt reflektierten Ultraschallsignale werden nun ferner herangezogen, um das Objekt bezüglich seiner Höhe zu klassifizieren. Falls beispielsweise mehrere Echos empfangen werden, kann davon ausgegangen werden, dass es sich um ein hohes Objekt handelt. Dies gilt insbesondere für den Fall, dass innerhalb einer vorbestimmten, kurzen Zeitdauer zwei Echos nacheinander empfangen werden oder dass das zweite Echo in etwa nach der doppelten Laufzeit des ersten Echos empfangen wird. Falls beispielsweise nur ein Echo empfangen wird, kann davon ausgegangen werden, dass es sich um ein niedriges Objekt handelt. Auf diese Weise kann das Objekt als hohes oder als niedriges Objekt klassifiziert werden. Dabei kann als hohes Objekt insbesondere ein solches Objekt angesehen werden, dessen Höhe im Bereich der Unterkante des Stoßfängers des Kraftfahrzeugs liegt. Ein niedriges Objekt kann als ein solches Objekt angesehen werden, welches von dem Kraftfahrzeug überfahren werden kann, ohne dass eine Beschädigung des Kraftfahrzeugs durch das Objekt erfolgt.

Gemäß einem wesentlichen Aspekt der vorliegenden Erfindung ist es nun vorgesehen, dass eine Plausibilisierung der Klassifizierung des Objekts vorgenommen wird. Insbesondere soll die Plausibilisierung durchgeführt werden, falls das Objekt als hohes Objekt klassifiziert wird. Dies ist insbesondere der Fall, wenn mittels des ersten Ultraschallsensors zumindest zwei Echos empfangen werden. Der erste Ultraschallsensor weist den ersten Erfassungsbereich auf. In dem ersten Erfassungsbereich können mit dem ersten Ultraschallsensor Objekte erfasst werden. Der erste Erfassungsbereich befindet sich oberhalb einer ersten Erfassungshöhe. Der erste Erfassungsbereich des ersten Ultraschallsensors liegt also oberhalb der ersten Erfassungshöhe. Oberhalb der ersten Erfassungshöhe können also Objekte mittels des ersten Ultraschallsensors empfangen werden. Die erste Erfassungshöhe beschreibt insbesondere die Mindesthöhe für Objekte, die mit dem ersten Ultraschallsensor empfangen werden können. Diese erste Erfassungshöhe wird insbesondere bezüglich der Hochachse des Kraftfahrzeugs bestimmt. Der erste Erfassungsbereich ergibt sich durch die Ausgestaltung des ersten Ultraschallsensors und/oder durch die Einbauposition des ersten Ultraschallsensors. Zur Plausibilisierung der Höhenmessung bezüglich des Objekts wird der zweite Ultraschallsensor verwendet. Der zweite Ultraschallsensor zeichnet sich dadurch aus, dass mit diesem Objekte nur oberhalb der zweiten Erfassungshöhe erfasst werden können. Diese zweite Erfassungshöhe liegt über der ersten Erfassungshöhe, oberhalb von der mit dem ersten Ultraschallsensor die Objekte erfasst werden können. Der zweite Ultraschallsensor weist den zweiten Erfassungsbereich auf. Dieser zweite Erfassungsbereich kann sich bezüglich der Hochachse des Kraftfahrzeugs oberhalb des ersten Erfassungsbereichs befinden. Mit anderen Worten kann der zweite Ultraschallsensor derart ausgebildet sein, dass mit diesem nur hohe Objekte erfasst werden können. Falls nun mit diesem zweiten Ultraschallsensor das als hoch klassifizierte Objekt auch erfasst werden kann, kann mit einer hohen Wahrscheinlichkeit davon ausgegangen werden, dass es sich um ein hohes Objekt handelt. Somit kann verhindert werden, dass Echos des Ultraschallsignals, die beispielswiese von Reflexionen an dem Boden stammen, als hohes Hindernis erkannt werden. Falls mehrere Echos empfangen werden, können diese auch von zwei niedrigen Objekten stammen. Durch die Plausibilisierung mit dem zweiten Ultraschallsensor kann die Höhe des Objekts mithilfe von Ultraschallsensoren auf zuverlässige Weise bestimmt werden.

Bevorzugt wird das Objekt als hoch klassifiziert, falls ein erstes Echo und ein zweites Echo des von dem Objekt reflektierten Ultraschallsignals empfangen werden, wobei das erste Echo und das zweite Echo innerhalb einer vorbestimmten Mindestdauer empfangen werden und/oder eine zeitliche Dauer zwischen dem Aussenden des Ultraschallsignals und dem Empfangen des ersten Echos einer zeitlichen Dauer zwischen dem Empfangen des ersten Echos und dem Empfangen des zweiten Echos entspricht. Falls ein erstes und zweites Echo von dem Objekt empfangen werden, kann überprüft werden, ob es sich bei dem Objekt um ein hohes Objekt handelt. Beispielsweise kann davon ausgegangen werden, dass es sich um ein hohes Objekt handelt, wenn das erste Echo und das zweite Echo innerhalb einer vorbestimmten Mindestdauer empfangen werden. In diesem Fall beschreibt das erste Echo die Reflexion des ausgesendeten Ultraschallsignals über den direkten Signalweg. Das zweite Echo, welches kurz nach dem ersten Echo empfangen wird, stammt dann üblicherweise von der Reflexion des Ultraschallsignals an einem Bereich, an welchem das Objekt den Boden bzw. der Fahrbahnoberfläche berührt. Es kann auch davon ausgegangen werden, dass es sich um ein hohes Objekt handelt, wenn das zweite Echo im Wesentlichen den doppelten Abstandswert des ersten Echos beschreibt. Auch in diesem Fall beschreibt das erste Echo die Reflexion des Ultraschallsignals über den direkten Signalweg. Das zweite Echo beschreibt das Ultraschallsignal, das an dem Objekt reflektiert wurde und welches anschließend an dem Kraftfahrzeug reflektiert wurde und nochmals von dem Objekt zurück zu dem Ultraschallsensor reflektiert wurde. Eine solche Mehrfachreflexion des Ultraschallsignals tritt üblicherweise bei hohen Objekt auf. Auf diese Weise kann eine Klassifizierung des Objekts mithilfe des ersten Ultraschallsensors durchgeführt werden.

Gemäß einer Ausführungsform wird das Ultraschallsignal mit dem ersten Ultraschallsensor ausgesendet und zur Plausibilisierung wird überprüft, ob das von dem Objekt reflektierte Ultraschallsignal von dem zweiten Ultraschallsensor empfangen wird. Dies bedeutet insbesondere, dass der zweite Ultraschallsensor nur dazu ausgelegt sein kann, Ultraschallsignale zu empfangen. Bevorzugt ist der zweite Ultraschallsensor nicht dazu ausgelegt, selbst Ultraschallsignale auszusenden. Dies bringt den Vorteil mit sich, dass der zweite Ultraschallsensor keine zusätzliche Sendeelektronik benötigt. Damit kann der zweite Ultraschallsensor kostengünstig ausgestaltet werden. Bei dieser Ausgestaltung wird das Ultraschallsignal von dem ersten Ultraschallsensor ausgesendet. Das von dem Objekt reflektierte Ultraschallsignal kann dann sowohl von dem ersten Ultraschallsensor als auch von dem zweiten Ultraschallsensor empfangen werden. Da der zweite Erfassungsbereich des zweiten Ultraschallsensors derart gewählt ist, dass das dieser nur Objekte ab der zweiten Erfassungshöhe erfassen kann, kann davon ausgegangen werden, dass es sich bei dem Objekt um ein hohes Objekt handelt, falls der zweite Ultraschallsensor das von dem Objekt reflektierte Ultraschallsignal empfangen kann. Damit kann die Plausibilisierung der Höhenerkennung auf kostengünstige Weise realisiert werden.

Gemäß einer weiteren Ausführungsform wird zur Klassifizierung des Objekts das Ultraschallsignal mit dem ersten Ultraschallsensor ausgesendet und das zumindest eine Echo wird von dem ersten Ultraschallsensor empfangen. Zur Plausibilisierung wird von dem zweiten Ultraschallsensor ein weiteres Ultraschallsignal ausgesendet und das von dem Objekt reflektierte weitere Ultraschallsignal wird von dem zweiten Ultraschallsensor empfangen. Mit anderen Worten können sowohl der erste Ultraschallsensor als auch der zweite Ultraschallsensor dazu ausgelegt sein, Ultraschallsignale auszusenden und Ultraschallsignale zu empfangen. Diese ermöglicht eine zuverlässige Erkennung der Objekte.

Hierbei ist es bevorzugt vorgesehen, dass der erste Ultraschallsensor zum Aussenden des Ultraschallsignals und der zweite Ultraschallsensor zum Aussenden des weiteren Ultraschallsignals parallel oder sequenziell angesteuert werden. Der erste Ultraschallsensor und/oder der zweite Ultraschallsensor können mit einem entsprechenden Steuergerät zum Aussenden des jeweiligen Ultraschallsignals angesteuert werden. Dabei kann es der Fall sein, dass der erste Ultraschallsensor und der zweite Ultraschallsensor parallel angesteuert werden. Dies bedeutet, dass der erste Ultraschallsensor und der zweite Ultraschallsensor zeitgleich betrieben werden. In diesem Fall kann es vorgesehen sein, dass das Ultraschallsignal, welches mit dem ersten Ultraschallsensor ausgesendet wird, und das weitere Ultraschallsignal, welches mit dem zweiten Ultraschallsensor ausgesendet wird, voneinander unterscheidbar sind. Beispielsweise können das Ultraschallsignal und das weitere Ultraschallsignal entsprechend kodiert werden. Es kann auch vorgesehen sein, dass sich das Ultraschallsignal und das weitere Ultraschallsignal bezüglich ihrer Frequenz unterscheiden. Somit kann unterschieden werden, ob mit einem der Ultraschallsensoren das Ultraschallsignal oder das weitere Ultraschallsignal empfangen wurde.

Alternativ dazu können der erste Ultraschallsensor und der zweite Ultraschallsensor sequenziell bzw. nacheinander angesteuert werden. Es kann auch der Fall sein, dass der zweite Ultraschallsensor nur angesteuert wird, falls auf Grundlage der Messung mit dem ersten Ultraschallsensor erkannt wird, dass es sich um ein hohes Objekt handelt. Des Weiteren kann es vorgesehen sein, dass die Ansteuerung des ersten Ultraschallsensors und des zweiten Ultraschallsensors in Abhängigkeit von der Geschwindigkeit des Kraftfahrzeugs durchgeführt wird. Somit kann beispielsweise die Klassifizierung der Objekte bei höheren Geschwindigkeiten erfolgen, da die Echos, die von dem zweiten Ultraschallsensor erzeugt werden nur hohe Objekte anzeigen. Dadurch könnte entschieden werden, auf hohe Objekte früher zu bremsen. Insgesamt wird somit eine situationsgerechte Ansteuerung der Ultraschallsensoren ermöglicht.

Weiterhin ist es vorteilhaft, wenn anhand des Erfassens des Objekts mittels des ersten Ultraschallsensors eine erste Positionsinformation für das Objekt bestimmt wird, anhand des Erfassens des Objekts mittels des zweiten Ultraschallsensors eine zweite Positionsinformation für das Objekt bestimmt wird und überprüft wird, ob die erste Positionsinformation mit der zweiten Positionsinformation übereinstimmt. Die erste Positionsinformation kann die relative Lage zwischen dem ersten Ultraschallsensor und dem Objekt beschreiben. Bevorzugt kann die erste Positionsinformation den Abstand zwischen dem ersten Ultraschallsensor und dem Objekt beschreiben. Auch die zweite Positionsinformation kann den Abstand zwischen dem zweiten Ultraschallsensor und dem Objekt beschreiben. Anhand der bekannten Einbauposition des ersten Ultraschallsensors des zweiten Ultraschallsensors sowie der Positionsinformationen kann dann überprüft werden, ob die jeweiligen Messungen, die mit dem ersten Ultraschallsensor dem zweiten Ultraschallsensor durchgeführt wurden, von demselben Objekt stammend. Auf diese Weise kann die Plausibilisierung der Messung des Objekts auf zuverlässige Weise durchgeführt werden.

Eine erfindungsgemäße Ultraschallsensorvorrichtung für ein Kraftfahrzeug umfasst einen ersten Ultraschallsensor, welcher dazu ausgelegt ist, Objekte innerhalb eines ersten Erfassungsbereichs, welcher sich oberhalb einer ersten Erfassungshöhe befindet, zu erfassen. Darüber hinaus umfasst die Ultraschallsensorvorrichtung ein Steuergerät, welches dazu ausgelegt ist, ein Objekt anhand zumindest eines mittels des ersten Ultraschallsensors empfangenen Echos eines von dem Objekt reflektierten Ultraschallsignals zu erfassen und das Objekt als hohes Objekt oder als niedriges Objekt zu klassifizieren. Des Weiteren umfasst die Ultraschallsensorvorrichtung einen zweiten Ultraschallsensor, welcher dazu ausgelegt ist, Objekte innerhalb eines zweiten Erfassungsbereichs, welcher sich oberhalb einer im Vergleich zu ersten Erfassungshöhe größeren, zweiten Erfassungshöhe befindet, zu erfassen. Darüber hinaus ist das Steuergerät dazu ausgelegt, zur Plausibilisierung der Klassifizierung des Objekts als hohes Objekt zu überprüfen, ob der zweite Ultraschallsensor das Objekt erfasst. Bevorzugt ist die Ultraschallsensorvorrichtung zum Durchführen eines erfindungsgemäßen Verfahrens und der vorteilhaften Ausgestaltungen davon ausgelegt.

Bevorzugt weist der erste Ultraschallsensor den ersten Erfassungsbereich auf und der zweite Ultraschallsensor weist den zweiten Erfassungsbereich auf, wobei der zweite Erfassungsbereich im Vergleich zu dem ersten Erfassungsbereich einen geringeren Öffnungswinkel aufweist. Der zweite Ultraschallsensor ist insbesondere so ausgeführt, dass dessen Schallkeule so geformt ist, dass Hindernisse ab einer gewissen Mindesthöhe bzw. der zweiten Erfassungshöhe erkannt werden können. Mit dem zweiten Ultraschallsensor können insbesondere niedrige Objekte nicht erkannt werden. Dabei weist der zweite Ultraschallsensor im Vergleich zu dem ersten Ultraschallsensor bevorzugt in der Vertikalen bzw. entlang einer Fahrzeughochachse einen eingeschränkten Öffnungswinkel auf.

Gemäß einer Ausführungsform weist der erste Ultraschallsensor eine erste Membran auf und der zweite Ultraschallsensor weist eine zu der ersten Membran verschiedene, zweite Membran auf. Die jeweiligen Ultraschallsensoren können eine Membran aufweisen, welche jeweils mit einem Wandlerelements bzw. piezoelektrischen Element zu Schwingungen angeregt werden kann. Auf diese Weise können mit den jeweiligen Ultraschallsensoren Ultraschallsignale ausgesendet werden. Mit den jeweiligen Wandlerelementen können auch die Schwingungen der Membranen beim Empfangen der reflektierten Ultraschallsignale bzw. die Echos erfasst werden. Damit können reflektierte Ultraschallsignal empfangen werden. Um die unterschiedlichen Schallkeulen bzw. Erfassungsbereiche der Ultraschallsensoren zu realisieren, können sich die Membranen des ersten Ultraschallsensors und des zweiten Ultraschallsensors unterscheiden. Beispielweise kann der zweite Ultraschallsensor im Vergleich zum ersten Ultraschallsensor eine Membran mit einem größeren Durchmesser aufweisen. Zudem können sich die Membranen durch entsprechende Ausnehmungen oder Einfräsungen an der Innenseite der Membran voneinander unterscheiden.

Es kann auch vorgesehen sein, dass das Steuergerät dazu ausgelegt ist, den ersten Ultraschallsensor zum Aussenden des Ultraschallsignals mit einer ersten Frequenz zu betreiben und den zweiten Ultraschallsensor zum Aussenden des weiteren Ultraschallsignals mit einer im Vergleich zur ersten Frequenz höheren, zweiten Frequenz zu betreiben. Es kann also vorgesehen sein, dass die Membranen der Ultraschallsensoren im Wesentlichen baugleich ausgebildet sind. Wenn die Membran des zweiten Ultraschallsensors mit einer höheren Frequenz angeregt wird, kann eine Schallkeule realisiert werden, welche im Vergleich zu der Schallkeule des ersten Ultraschallsensors schmaler ist. Somit kann auf einfache Weise die unterschiedlichen Erfassungsbereiche der Ultraschallsensoren bzw. der erste Erfassungsbereich des ersten Ultraschallsensors und der zweite Erfassungsbereich des zweiten Ultraschallsensors realisiert werden.

Falls der ersten Ultraschallsensor und der zweite Ultraschallsensor mit unterschiedlichen Frequenzen betrieben werden und das von dem ersten Ultraschallsensor ausgesendete Ultraschallsignal mittels des zweiten Ultraschallsensors empfangen werden soll, ist darauf zu achten, dass die Membran des zweiten Ultraschallsensors zum Empfangen des Ultraschallsignals ausgelegt ist. Falls das Ultraschallsignal mit einer Codierung ausgesendet wird, ist darauf zu achten, dass das empfangene Ultraschallsignal mit dem zweiten Ultraschallsensor decodiert werden kann. Es kann auch vorgesehen sein, dass auf eine Codierung des ausgesendeten Ultraschallsignals verzichtet wird.

Bevorzugt weist die Ultraschallsensorvorrichtung eine Mehrzahl von ersten Ultraschallsensoren und/oder eine Mehrzahl von zweiten Ultraschallsensoren auf. Die ersten Ultraschallsensoren können beispielsweise Teil eines Parkhilfesystems des Kraftfahrzeugs sein. In diesem Fall können an jedem Stoßfänger des Kraftfahrzeugs bis zu sechs Ultraschallsensoren vorgesehen sein. Es kann aber vorgesehen sein, dass die Ultraschallsensorvorrichtung mehrere zweite Ultraschallsensoren aufweist. Beispielweise kann jedem Stoßfänger ein zweiter Ultraschallsensor zugeordnet sein. Die Ultraschallsensorvorrichtung kann auch Teil eines Bremsassistenten oder eines Notbremsassistenten sein. Zudem kann es vorgesehen sein, dass die Ultraschallsensorvorrichtung Teil eines Fahrerassistenzsystems ist, welches Objekte in einem Schwenkbereich der jeweiligen Türen des Kraftfahrzeugs erfassen kann und/oder welches die Insassen beim Öffnen der Türen unterstützen kann.

Im Betrieb der Ultraschallsensorvorrichtung können akustische Kurzschlüsse zwischen dem ersten Ultraschallsensor und dem zweiten Ultraschallsensor auftreten. Diese akustischen Kurzschlüsse beschreiben die Übertragung des Ultraschallsignals von dem ersten Ultraschallsensor zu dem zweiten Ultraschallsensor. Diese können im Nahbereich auf indirektem Weg zwischen dem ersten Ultraschallsensor und dem zweiten Ultraschallsensor auftreten. Hierbei kann es insbesondere vorgesehen sein, dass diese akustischen Kurzschlüsse erkannt und/oder herausgefiltert werden. Diese Filterung beeinflusst die Funktion der Ultraschallsensorvorrichtung nicht, da mittels des ersten Ultraschallsensors in dem Nahbereich die Objekte klassifiziert werden.

Ein erfindungsgemäßes Kraftfahrzeug umfasst eine erfindungsgemäße Ultraschallsensorvorrichtung. Das Kraftfahrzeug kann als Personenkraftwagen ausgebildet sein. Es kann auch vorgesehen sein, dass das Kraftfahrzeug als Nutzfahrzeug ausgebildet ist.

Zudem ist es insbesondere vorgesehen, dass eine erste Einbauhöhe des ersten Ultraschallsensors an dem Kraftfahrzeug einer zweiten Einbauhöhe des zweiten Ultraschallsensors an dem Kraftfahrzeug entspricht. Mit anderen Worten weisen der erste Ultraschallsensor und der zweite Ultraschallsensor die gleiche Einbauhöhe auf. Damit ergeben sich für einen Betrachter bezüglich der Einbauhöhe optisch keine oder nur geringfügige Unterschiede zwischen dem ersten Ultraschallsensor und dem zweiten Ultraschallsensor. Der Einbaupositionen des ersten und des zweiten Ultraschallsensors können sich aber bezüglich der Fahrzeuglängsrichtung und/oder der Fahrzeugquerrichtung voneinander unterscheiden.

Gemäß einer weiteren Ausgestaltung unterscheidet sich ein erster Einbauwinkel des ersten Ultraschallsensors an dem Kraftfahrzeugzeug von einem zweiten Einbauwinkel des zweiten Ultraschallsensors an dem Kraftfahrzeug. Kann also gemäß einer Ausführungsform der Fall sein, dass der erste Ultraschallsensor der zweite Ultraschallsensor die gleichen Erfassungsbereiche aufweisen. In diesem Fall können sich die Einbauwinkel der Ultraschallsensoren voneinander unterscheiden. Der erste Ultraschallsensor kann derart eingebaut sein, dass seine Hauptabstrahlrichtung im Wesentlichen parallel zu der Fahrbahnoberfläche verläuft. Der zweite Ultraschallsensor kann im Vergleich zu dem ersten Ultraschallsensor nach oben geneigt sein, sodass mit diesem nur Objekte oberhalb der zweiten Erfassungshöhe erfasst werden können. Es kann auch vorgesehen sein, dass sich der erste Ultraschallsensor und der zweite Ultraschallsensor bezüglich der Einbauhöhe unterscheiden.

Bevorzugt sind der erste Ultraschallsensor und/oder der zweite Ultraschallsensor in einem Frontbereich, einem Heckbereich und/oder einem Seitenbereich des Kraftfahrzeugs angeordnet. Wie bereits angedeutet, können mehrere erste Ultraschallsensoren und/oder zweite Ultraschallsensoren an dem Kraftfahrzeug verbaut sein. Die ersten Ultraschallsensoren und/oder die zweiten Ultraschallsensoren können dem Frontbereich und/oder dem Heckbereich des Kraftfahrzeugs zugeordnet sein. Beispielsweise können die Ultraschallsensoren an den Stoßfänger angeordnet sein. Dies eignet sich, wenn die Ultraschallsensoren Teil eines Parkhilfesystems und/oder eines Bremsassistenten sind. Es kann auch vorgesehen sein, dass die Ultraschallsensoren an den Seitenbereichen des Kraftfahrzeugs, beispielsweise an den Türen des Kraftfahrzeugs angeordnet sind. In diesem Fall können die Ultraschallsensoren Teil eines Türöffnungsassistenten sein. Somit können Objekte in der Umgebung des Kraftfahrzeugs zuverlässig erfasst und klassifiziert werden.

Die mit Bezug auf das erfindungsgemäße Verfahren vorgestellten bevorzugten Ausführungsformen und deren Vorteile gelten in gleicher Weise für die erfindungsgemäße Ultraschallsensorvorrichtung sowie das erfindungsgemäße Kraftfahrzeug.

Die Erfindung wird durch die Ansprüche definiert. Weitere Merkmale der Erfindung ergeben sich aus den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der Erfindung, welches eine Ultraschallsensorvorrichtung mit ersten Ultraschallsensoren und einem zweiten Ultraschallsensor aufweist;
- Fig. 2: das Kraftfahrzeug gemäß Fig. 1 in einer Seitenansicht, wobei Erfassungsbereiche eines der ersten Ultraschallsensoren und des zweiten Ultraschallsensors dargestellt sind; und
- Fig. 3: Erfassungsbereiche eines der ersten Ultraschallsensoren und des zweiten Ultraschallsensors gemäß einer weiteren Ausführungsform.

In den Figuren werden gleiche und funktionsgleiche Elemente mit den gleichen Bezugszeichen versehen.

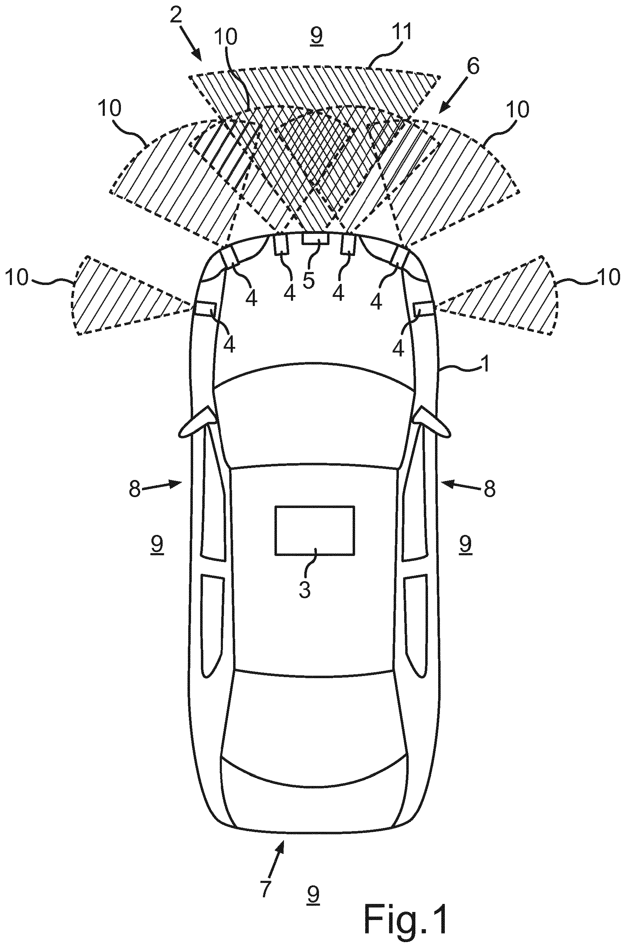

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst eine Ultraschallsensorvorrichtung 2, welche beispielweise Teil eines Fahrerassistenzsystems des Kraftfahrzeugs 1 sein kann. Insbesondere kann die Ultraschallsensorvorrichtung 2 Teil eines Parkhilfesystems des Kraftfahrzeugs 1 sein.

Die Ultraschallsensorvorrichtung 2 umfasst eine Mehrzahl von ersten Ultraschallsensoren 4. In dem vorliegenden Ausführungsbeispiel umfasst die Ultraschallsensorvorrichtung 2 sechs erste Ultraschallsensoren 4. Darüber hinaus umfasst die Ultraschallsensorvorrichtung 2 einen zweiten Ultraschallsensor 5. Die Ultraschallsensoren 4, 5 sind vorliegend in einem Frontbereich 6 des Kraftfahrzeugs 1 angeordnet. Alternativ oder zusätzlich können die Ultraschallsensoren 4, 5 auch in einem Heckbereich 7 oder in Seitenbereichen 8 des Kraftfahrzeugs 1 angeordnet sein.

Mit den ersten Ultraschallsensoren 4 können Ultraschallsignale ausgesendet werden. Darüber hinaus können mit den ersten Ultraschallsensoren 4 die Ultraschallsignale, die von einem Objekt in einem Umgebungsbereich 9 des Kraftfahrzeugs 1 reflektiert werden, wieder als Echos empfangen werden. Die ersten Ultraschallsensoren 4 weisen einen jeweiligen ersten Erfassungsbereich 10 auf, in welchen mit den ersten Ultraschallsensoren 4 Objekte erfasst werden können. Mit dem zweiten Ultraschallsensor 5 können ebenfalls reflektierte Ultraschallsignale empfangen werden. Der zweite Ultraschallsensor 5 weist einen zweiten Erfassungsbereich 11 auf, in welchem mit dem zweiten Ultraschallsensor 5 Ultraschallsignale empfangen werden können. Der zweite Ultraschallsensor 5 kann ferner dazu ausgelegt sein, Ultraschallsignale auszusenden.

Des Weiteren umfasst die Ultraschallsensorvorrichtung 2 ein elektronisches Steuergerät 3, welches zur Datenübertragung mit den Ultraschallsensoren 4, 5 verbunden ist. Entsprechende Datenleitungen sind vorliegend der Übersichtlichkeit halber nicht dargestellt. Somit können mittels des Steuergeräts 3 von den jeweiligen Ultraschallsensoren 4, 5 Signale empfangen werden, welche die reflektierten Ultraschallsignale bzw. die Echos beschreiben. Auf diese Weise können mithilfe des Steuergeräts 3 die Objekte in dem Umgebungsbereich 9 erkannt werden. Anhand der Signale, welche die Echos beschreiben, kann auch eine Klassifizierung der Objekte durchgeführt werden. Falls mit einem der ersten Ultraschallsensoren 4 ein erstes und ein zweites Echo von einem Objekt empfangen werden, kann davon ausgegangen werden, dass es sich bei dem Objekt um ein hohes Objekt handelt. Dies gilt insbesondere für den Fall, wenn das erste und das zweite Echo innerhalb einer vorbestimmten Mindestdauer empfangen werden und/oder wenn das zweite Echo den doppelten Abstand des ersten Echos beschreibt. Falls nur ein Echo von dem Objekt empfangen wird, kann das Objekt als niedriges Objekt angesehen werden.

Der zweite Ultraschallsensor 5 soll nun dazu verwendet werden, die Klassifizierung des Objekts als hohes Objekt oder als niedriges Objekt zu plausibilisieren. Mit dem zweiten Ultraschallsensor 5 können nur Objekte oberhalb einer zweiten Erfassungshöhe h2 erfasst werden. Dabei ist die zweite Erfassungshöhe h2 größer als eine erste Erfassungshöhe h1, oberhalb welcher Objekte mit den ersten Ultraschallsensoren 4 erfasst werden können. Falls nun ein Objekt auf Grundlage der Messungen, die mit einem der ersten Ultraschallsensoren 4 durchgeführt werden, als hoch klassifiziert wird, wird zudem überprüft, ob dieses Objekt auch mit dem zweiten Ultraschallsensor 5 erfasst werden konnte. Da er mit dem zweiten Ultraschallsensor 5 nur hohe Objekte erfasst werden können, kann eine Plausibilisierung der Klassifizierung des Objekts als hohes Objekt durchgeführt werden.

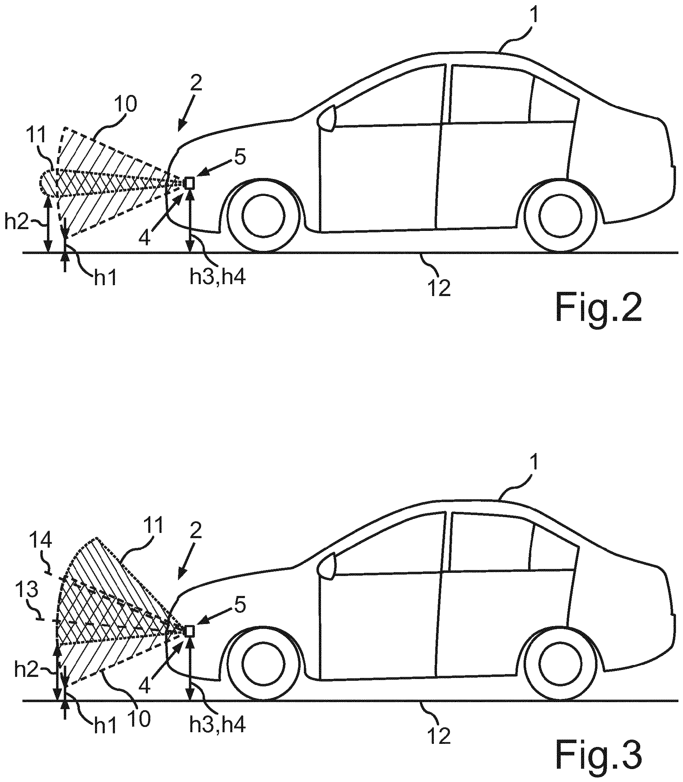

Fig. 2 zeigt das Kraftfahrzeug 1 gemäß Fig. 1 in einer Seitenansicht. Hierbei ist zu erkennen, dass der zweite Erfassungsbereich 11 des zweiten Ultraschallsensors 5 im Vergleich zu dem Erfassungsbereich 10 des ersten Ultraschallsensors 4 schmaler ausgebildet ist. Vorliegend ist eine Einbauhöhe h3 des ersten Ultraschallsensors 4 und eine Einbauhöhe h4 des zweiten Ultraschallsensors 5 gleich. Der zweite Erfassungsbereich 11 des zweiten Ultraschallsensors 5 weist im Vergleich zu dem ersten Erfassungsbereich 10 des ersten Ultraschallsensors 4 einen geringeren Öffnungswinkel auf. Mit dem ersten Ultraschallsensor 4 können Objekte oberhalb der ersten Erfassungshöhe h1 erfasst werden und mit dem zweiten Ultraschallsensor 5 können nur Objekte oberhalb der zweiten Erfassungshöhe h2 erfasst werden. Die Erfassungshöhen h1 und h2 werden vorliegend bezüglich einer Fahrzeughochachse und ausgehenden von einer Fahrbahnoberfläche 12 einer Fahrbahn, auf welcher sich das Kraftfahrzeug 1 befindet, bestimmt.

Um den zweiten Erfassungsbereich 11 des zweiten Ultraschallsensors 5 zu erreichen, kann es vorgesehen sein, dass der zweite Ultraschallsensor 5 im Vergleich zu dem ersten Ultraschallsensor 4 mit einer höheren Frequenz zum Aussenden des Ultraschallsignals betrieben wird. Es kann auch vorgesehen sein, dass sich die Membranen der Ultraschallsensoren 4, 5 voneinander unterscheiden.

Fig. 3 zeigt ein Kraftfahrzeug 1 mit einer Ultraschallsensorvorrichtung 2 gemäß einer weiteren Ausführungsform. In diesem Fall weisen der erste Erfassungsbereich 10 des ersten Ultraschallsensors 4 und der zweite Erfassungsbereich 11 des zweiten Ultraschallsensors 5 den gleichen Öffnungswinkel auf. Vorliegend unterscheiden sich die Einbauwinkel des ersten Ultraschallsensors 4 und des zweiten Ultraschallsensors 5. Bei dem ersten Ultraschallsensor 4 verläuft die Hauptabstrahlrichtung 13 im Wesentlichen parallel zu der Fahrbahnoberfläche 12. Bei dem zweiten Ultraschallsensor 5 ist die Hauptabstrahlrichtungen 14 im Vergleich zu der Hauptabstrahlrichtungen 13 des ersten Ultraschallsensors 4 entlang der Fahrzeughochachse nach oben geneigt.

## Patentansprüche

1. Verfahren zum Erfassen eines Objekts in einem Umgebungsbereich (9) eines Kraftfahrzeugs (1), bei welchem mittels eines ersten Ultraschallsensors (4) das Objekt innerhalb eines ersten Erfassungsbereichs (10) erfasst wird, wobei sich der erste Erfassungsbereich (10) des ersten Ultraschallsensors (4) oberhalb einer ersten Erfassungshöhe (h1) befindet, wobei zum Erfassen des Objekts zumindest ein Echo des von dem Objekt reflektierten Ultraschallsignals mittels des ersten Ultraschallsensors (4) empfangen wird, wobei das Objekt anhand des zumindest einen empfangenen Echos als hohes Objekt oder als niedriges Objekt klassifiziert wird, und wobei zur Plausibilisierung der Klassifizierung des Objekts als hohes Objekt überprüft wird, ob das Objekt mit einem zweiten Ultraschallsensor (5) innerhalb eines zweiten Erfassungsbereichs (11) erfasst wird, wobei sich der zweite Erfassungsbereich (11) des zweiten Ultraschallsensors (5) oberhalb einer in Vergleich zur ersten Erfassungshöhe (h1) größeren, zweiten Erfassungshöhe (h2) befindet.

2. Verfahren nach Anspruch 1,
**dadurch gekennzeichnet, dass**
das Objekt als hoch klassifiziert wird, falls ein erstes Echo und ein zweites Echo des von dem Objekt reflektierten Ultraschallsignals empfangen werden, wobei das erste Echo und das zweite Echo innerhalb einer vorbestimmten Mindestdauer empfangen werden und/oder eine zeitliche Dauer zwischen dem Aussenden des Ultraschallsignals und dem Empfangen des ersten Echos einer zeitlichen Dauer zwischen dem Empfangen des ersten Echos und dem Empfangen des zweiten Echos entspricht.

3. Verfahren nach Anspruch 1 oder 2,
**dadurch gekennzeichnet, dass**
das Ultraschallsignal mit dem ersten Ultraschallsensor (4) ausgesendet wird und zur Plausibilisierung überprüft wird, ob das von dem Objekt reflektierte Ultraschallsignal von dem zweiten Ultraschallsensor (5) empfangen wird.

4. Verfahren nach Anspruch 1 oder 2,
**dadurch gekennzeichnet, dass**
zur Klassifizierung des Objekts das Ultraschallsignal mit dem ersten Ultraschallsensor (4) ausgesendet wird und das zumindest eine Echo von dem ersten Ultraschallsensor (4) empfangen wird und dass zur Plausibilisierung von dem zweiten Ultraschallsensor (5) ein weiteres Ultraschallsignal ausgesendet wird und das von dem Objekte reflektierte weitere Ultraschallsignal von dem zweiten Ultraschallsensor (5) empfangen wird.

5. Verfahren nach Anspruch 4,
**dadurch gekennzeichnet, dass**
der erste Ultraschallsensor (4) zum Aussenden des Ultraschallsignals und der zweite Ultraschallsensor (5) zum Aussenden des weiteren Ultraschallsignals parallel oder sequentiell angesteuert werden.

6. Verfahren nach einem der vorhergehenden Ansprüche,
**dadurch gekennzeichnet, dass**
anhand des Erfassens des Objekts mittels des ersten Ultraschallsensors (4) eine erste Positionsinformation für das Objekt bestimmt wird, anhand des Erfassens des Objekts mittels des zweiten Ultraschallsensors (5) eine zweite Positionsinformation für das Objekt bestimmt wird und überprüft wird, ob die erste Positionsinformation mit der zweiten Positionsinformation übereinstimmt.

7. Ultraschallsensorvorrichtung (2) für ein Kraftfahrzeug, mit einem ersten Ultraschallsensor (4), welcher dazu ausgelegt ist, Objekte innerhalb eines ersten Erfassungsbereichs (10), welcher sich oberhalb einer ersten Erfassungshöhe (h1) befindet, zu erfassten, und mit einem Steuergerät (3), welches dazu ausgelegt ist, ein Objekt anhand zumindest eines mittels des ersten Ultraschallsensors (4) empfangenen Echos eines von dem Objekt reflektierten Ultraschallsignals zu erfassen und das Objekt als hohes Objekt oder als niedriges Objekt zu klassifizieren, wobei die Ultraschallsensorvorrichtung (2) einen zweiten Ultraschallsensor (5) aufweist, welcher dazu ausgelegt ist, Objekte innerhalb eines zweiten Erfassungsbereichs (11), welcher sich oberhalb einer im Vergleich zu ersten Erfassungshöhe (h1) größeren, zweiten Erfassungshöhe (h2) befindet, zu erfassen, und wobei das Steuergerät (3) dazu ausgelegt ist, zur Plausibilisierung der Klassifizierung des Objekts als hohes Objekt zu überprüfen, ob der zweite Ultraschallsensor (5) das Objekt erfasst.

8. Ultraschallsensorvorrichtung (2) nach Anspruch 7,
**dadurch gekennzeichnet, dass**
der zweite Erfassungsbereich (11) im Vergleich zu dem ersten Erfassungsbereich (10) einen geringeren Öffnungswinkel aufweist.

9. Ultraschallsensorvorrichtung (2) nach Anspruch 7 oder 8,
**dadurch gekennzeichnet, dass**
der erste Ultraschallsensor (4) eine ersten Membran und der zweite Ultraschallsensor (5) eine von der ersten Membran verschiedene, zweite Membran aufweist.

10. Ultraschallsensorvorrichtung (2) nach Anspruch 7 oder 8,
**dadurch gekennzeichnet, dass**
das Steuergerät (3) dazu ausgelegt ist, den ersten Ultraschallsensor (4) zum Aussenden des Ultraschallsignals mit einer ersten Frequenz zu betreiben und den zweiten Ultraschallsensor (5) zum Aussenden eines weiteren Ultraschallsignals mit einer im Vergleich zur ersten Frequenz höheren, zweiten Frequenz zu betreiben.

11. Ultraschallsensorvorrichtung (2) nach einem der Ansprüche 7 bis 10,
**dadurch gekennzeichnet, dass**
die Ultraschallsensorvorrichtung (2) eine Mehrzahl von ersten Ultraschallsensoren (4) und/oder eine Mehrzahl von zweiten Ultraschallsensoren (5) aufweist.

12. Kraftfahrzeug (1) mit einer Ultraschallsensorvorrichtung (2) nach einem der Ansprüche 7 bis 11.

13. Kraftfahrzeug (1) nach Anspruch 12,
**dadurch gekennzeichnet, dass**
eine erste Einbauhöhe (h3) des ersten Ultraschallsensors (4) an dem Kraftfahrzeug (1) einer zweiten Einbauhöhe (h4) des zweiten Ultraschallsensors (5) an dem Kraftfahrzeug (1) entspricht.

14. Kraftfahrzeug (1) nach Anspruch 12 oder 13,
**dadurch gekennzeichnet, dass**
sich einer erster Einbauwinkel des ersten Ultraschallsensors (4) an dem Kraftfahrzeug (1) von einem zweiten Einbauwinkel des zweiten Ultraschallsensors (5) an dem Kraftfahrzeug unterscheidet.

15. Kraftfahrzeug (1) nach einem der Ansprüche 12 bis 14,
**dadurch gekennzeichnet, dass**
der erste Ultraschallsensor (4) und/oder der zweite Ultraschallsensor (5) in einem Frontbereich (6), einem Heckbereich (7) und/oder einem Seitenbereich (8) des Kraftfahrzeugs (1) angeordnet sind.

## Claims

1. Method for capturing an object in a surrounding region (9) of a motor vehicle (1), wherein the object is captured within a first capturing region (10) by means of a first ultrasonic sensor (4), wherein the first capturing region (10) of the first ultrasonic sensor (4) is located above a first capturing height (h1), wherein at least one echo of the ultrasonic signal reflected by the object is received by means of the first ultrasonic sensor (4) for capturing the object, wherein the object is classified as a high object or as a low object on the basis of the at least one received echo, and wherein, for the purpose of verifying the plausibility of the classification of the object as a high object, a check is performed as to whether the object is captured within a second capturing region (11) using a second ultrasonic sensor (5), wherein the second capturing region (11) of the second ultrasonic sensor (5) is located above a second capturing height (h2) that is greater than the first capturing height (h1).

2. Method according to Claim 1,
**characterized in that**
the object is classified as high if a first echo and a second echo of the ultrasonic signal reflected by the object are received, wherein the first echo and the second echo are received within a predetermined minimum period and/or a time period between the ultrasonic signal being emitted and the first echo being received corresponds to a time period between the first echo being received and the second echo being received.

3. Method according to Claim 1 or 2,
**characterized in that**
the ultrasonic signal is emitted using the first ultrasonic sensor (4) and, for the purpose of verifying the plausibility, a check is performed as to whether the ultrasonic signal reflected by the object is received by the second ultrasonic sensor (5).

4. Method according to Claim 1 or 2,
**characterized in that**,
for the purpose of classifying the object, the ultrasonic signal is emitted using the first ultrasonic sensor (4) and the at least one echo is received by the first ultrasonic sensor (4) and **in that**, for the purpose of verifying the plausibility, a further ultrasonic signal is emitted by the second ultrasonic sensor (5) and the further ultrasonic signal reflected by the object is received by the second ultrasonic sensor (5).

5. Method according to Claim 4,
**characterized in that**
the first ultrasonic sensor (4) for emitting the ultrasonic signal and the second ultrasonic sensor (5) for emitting the further ultrasonic signal are controlled in parallel or sequentially.

6. Method according to one of the preceding claims,
**characterized in that**
a first piece of position information for the object is determined on the basis of the capturing of the object by means of the first ultrasonic sensor (4), a second piece of position information for the object is determined on the basis of the capturing of the object by means of the second ultrasonic sensor (5), and a check is performed as to whether the first piece of position information corresponds to the second piece of position information.

7. Ultrasonic sensor apparatus (2) for a motor vehicle, having a first ultrasonic sensor (4), which is designed to capture objects within a first capturing region (10) located above a first capturing height (h1), and having a control device (3), which is designed to capture an object on the basis of at least one echo, which is received by means of the first ultrasonic sensor (4), of an ultrasonic signal, which is reflected by the object, and to classify the object as a high object or as a low object,
wherein the ultrasonic apparatus (2) has a second ultrasonic sensor (5), which is designed to capture objects within a second capturing region (11), which is located above a second capturing height (h2) that is greater than the first capturing height (h1), and wherein the control device (3) is designed to check, for the purpose of verifying the plausibility of the classification of the object as a high object, whether the second ultrasonic sensor (5) captures the object.

8. Ultrasonic sensor apparatus (2) according to Claim 7,
**characterized in that**
the second capturing region (11) has a smaller opening angle than the first capturing region (10).

9. Ultrasonic sensor apparatus (2) according to Claim 7 or 8,
**characterized in that**
the first ultrasonic sensor (4) has a first diaphragm and the second ultrasonic sensor (5) has a second diaphragm, which is different from the first diaphragm.

10. Ultrasonic sensor apparatus (2) according to Claim 7 or 8,
**characterized in that**
the control device (3) is designed to operate the first ultrasonic sensor (4) with a first frequency for emitting the ultrasonic signal and to operate the second ultrasonic sensor (5) with a second frequency, which is higher than the first frequency, for emitting a further ultrasonic signal.

11. Ultrasonic sensor apparatus (2) according to one of Claims 7 to 10,
**characterized in that**
the ultrasonic sensor apparatus (2) has a plurality of first ultrasonic sensors (4) and/or a plurality of second ultrasonic sensors (5).

12. Motor vehicle (1) having an ultrasonic sensor apparatus (2) according to one of Claims 7 to 11.

13. Motor vehicle (1) according to Claim 12, **characterized in that**
a first installation height (h3) of the first ultrasonic sensor (4) at the motor vehicle (1) corresponds to a second installation height (h4) of the second ultrasonic sensor (5) at the motor vehicle (1).

14. Motor vehicle (1) according to Claim 12 or 13,
**characterized in that**
a first installation angle of the first ultrasonic sensor (4) at the motor vehicle (1) differs from a second installation angle of the second ultrasonic sensor (5) at the motor vehicle.

15. Motor vehicle (1) according to one of Claims 12 to 14,
**characterized in that**
the first ultrasonic sensor (4) and/or the second ultrasonic sensor (5) are arranged in a front region (6), a rear region (7) and/or a side region (8) of the motor vehicle (1).

## Revendications

1. Procédé pour détecter un objet dans une zone environnante (9) d'un véhicule automobile (1), avec lequel l'objet est détecté à l'intérieur d'une première zone de détection (10) au moyen d'un premier capteur à ultrasons (4), la première zone de détection (10) du premier capteur à ultrasons (4) se trouvant au-dessus d'une première hauteur de détection (h1), au moins un écho du signal ultrasonore réfléchi par l'objet étant reçu au moyen du premier capteur à ultrasons (4) en vue de détecter l'objet, l'objet étant classifié à l'aide de l'au moins un écho reçu en tant qu'objet haut ou en tant qu'objet bas et, en vue de vérifier la plausibilité de la classification de l'objet en tant qu'objet haut, un contrôle étant effectué pour vérifier si l'objet est détecté avec un deuxième capteur à ultrasons (5) à l'intérieur d'une deuxième zone de détection (11), la deuxième zone de détection (11) du deuxième capteur à ultrasons (5) se trouvant au-dessus d'une deuxième hauteur de détection (h2), plus grande en comparaison de la première hauteur de détection (h1).

2. Procédé selon la revendication 1, **caractérisé en ce que** l'objet est classifié en tant que haut dans le cas où un premier écho et un deuxième écho du signal ultrasonore réfléchi par l'objet sont reçus, le premier écho et le deuxième écho étant reçus au sein d'une durée minimale prédéterminée et/ou une durée temporelle entre l'émission du signal ultrasonore et la réception du premier écho correspondant à une durée temporelle entre la réception du premier écho et la réception du deuxième écho.

3. Procédé selon la revendication 1 ou 2, **caractérisé en ce que** le premier signal ultrasonore est émis par le premier capteur à ultrasons (4) et la vérification de la plausibilité consiste à vérifier si le signal ultrasonore réfléchi par l'objet est reçu par le deuxième capteur à ultrasons (5).

4. Procédé selon la revendication 1 ou 2, **caractérisé en ce que** pour la classification de l'objet, le signal ultrasonore est émis par le premier capteur à ultrasons (4) et l'au moins un écho est reçu par le premier capteur à ultrasons (4) et **en ce que** pour la vérification de la plausibilité, un signal ultrasonore supplémentaire est émis par le deuxième capteur à ultrasons (5) et le signal ultrasonore supplémentaire réfléchi par l'objet est reçu par le deuxième capteur à ultrasons (5).

5. Procédé selon la revendication 4, **caractérisé en ce que** le premier capteur à ultrasons (4) destiné à émettre le signal ultrasonore et le deuxième capteur à ultrasons (5) destiné à émettre le signal ultrasonore supplémentaire sont commandés en parallèle ou séquentiellement.

6. Procédé selon l'une des revendications précédentes, **caractérisé en ce qu'**une première information de position pour l'objet est déterminée à l'aide de la détection de l'objet au moyen du premier capteur à ultrasons (4), une deuxième information de position pour l'objet est déterminée à l'aide de la détection de l'objet au moyen du deuxième capteur à ultrasons (5) et un contrôle est effectué afin de vérifier si la première information de position coïncide avec la deuxième information de position.

7. Dispositif de détection par ultrasons (2) pour un véhicule automobile, comprenant un premier capteur à ultrasons (4) qui est conçu pour détecter des objets à l'intérieur d'une première zone de détection (10), laquelle se trouve au-dessus d'une première hauteur de détection (h1), et comprenant un contrôleur (3) qui est conçu pour détecter un objet à l'aide d'au moins un écho d'un signal ultrasonore réfléchi par l'objet reçu au moyen du premier capteur à ultrasons (4) et classifier l'objet en tant qu'objet haut ou en tant qu'objet bas, le dispositif de détection par ultrasons (2) possédant un deuxième capteur à ultrasons (5), lequel est conçu pour détecter des objets à l'intérieur d'une deuxième zone de détection (11), laquelle se trouve au-dessus d'une deuxième hauteur de détection (h2), plus grande en comparaison de la première hauteur de détection (h1), et le contrôleur (3) étant conçu pour contrôler, en vue de vérifier la plausibilité de la classification de l'objet en tant qu'objet haut, si le deuxième capteur à ultrasons (5) détecte l'objet.

8. Dispositif de détection par ultrasons (2) selon la revendication 7, **caractérisé en ce que** la deuxième zone de détection (11) présente un angle d'ouverture plus petit en comparaison de la première zone de détection (10) .

9. Dispositif de détection par ultrasons (2) selon la revendication 7 ou 8, **caractérisé en ce que** le premier capteur à ultrasons (4) possède une première membrane et le deuxième capteur à ultrasons (5) une deuxième membrane différente de la première membrane.

10. Dispositif de détection par ultrasons (2) selon la revendication 7 ou 8, **caractérisé en ce que** le contrôleur (3) est conçu pour faire fonctionner le premier capteur à ultrasons (4) en vue d'émettre le signal ultrasonore avec une première fréquence et le deuxième capteur à ultrasons (5) en vue d'émettre un signal ultrasonore supplémentaire avec une deuxième fréquence, plus élevée en comparaison de la première fréquence.

11. Dispositif de détection par ultrasons (2) selon l'une des revendications 7 à 10, **caractérisé en ce que** le dispositif de détection par ultrasons (2) possède une pluralité de premiers capteurs à ultrasons (4) et/ou une pluralité de deuxièmes capteurs à ultrasons (5).

12. Véhicule automobile (1) comprenant un dispositif de détection par ultrasons (2) selon l'une des revendications 7 à 11.

13. Véhicule automobile (1) selon la revendication 12, **caractérisé en ce qu'**une première hauteur d'installation (h3) du premier capteur à ultrasons (4) sur le véhicule automobile (1) correspond à une deuxième hauteur d'installation (h4) du deuxième capteur à ultrasons (5) sur le véhicule automobile (1).

14. Véhicule automobile (1) selon la revendication 12 ou 13, **caractérisé en ce qu'**un premier angle d'installation du premier capteur à ultrasons (4) sur le véhicule automobile (1) se différencie d'un deuxième angle d'installation du deuxième capteur à ultrasons (5) sur le véhicule automobile.

15. Véhicule automobile (1) selon l'une des revendications 12 à 14, **caractérisé en ce que** le premier capteur à ultrasons (4) et/ou le deuxième capteur à ultrasons (5) sont disposés dans une zone avant (6), une zone arrière (7) et/ou une zone latérale (8) du véhicule automobile (1) .
